# EUROPEAN PATENT APPLICATION

(11) **EP 4 627 918 A1**
(43) Date of publication of application: **08.10.2025**
(21) Application number: 25163716.1
(22) Date of filing: 14.03.2025
(51) Int. Cl.: A01K 97/10

(54) **SUPPORT SYSTEM AND SUPPORT STRUCTURE FOR FISHING RODS**

(30) Priority: 15.03.2024 IT 202400005839
(71) Applicant: Pozzi, Massimiliano, 47924 Rimini (IT)
(72) Inventor: Pozzi, Massimiliano, 47924 Rimini (IT)
(74) Representative: Zanotti, Laura

(57) **Abstract**

A support system for fishing rods comprises at least one arm (3) for supporting at least one fishing rod, wherein the arm (3) is suitable for being connected to a ground support, wherein the arm (3) comprises at least a first portion (31) and at least a second portion (32), wherein the second portion (32) is connected to the first portion (31) so as to rotate or translate between a closed position in which it is at least partially superimposed on the first portion (31) and an open position in which it is at least partially adjacent to the first portion (31) so as to prolong the extension of the first portion (31).

## Description

### State of the art

The fishing technique known as "carpfishing" has become widespread in particular since the 1980s. It is a specific fishing technique aimed at catching carp and other large cyprinids. It is a prolonged fishing method that requires specific equipment.

The equipment includes a structure of ground support intended for fishing rods, called a "rod pod". The rod pod usually has a base of ground support and a crossbar. A respective fishing rod support element known as a "buzz bar" is mounted at each end of the crossbar.

The ground support must provide high stability as it is subject to significant stresses.

In a known type of rod pod, the crossbar, in an area located between the centre of the crossbar and each end, is connected by means of clamping levers to two telescopic legs of the ground support.

The buzz bar has a "V"-shaped body hinged to one end of the crossbar so as to be inclined with respect to it and an arm attached to the top of the "V" for supporting the rods.

Another rod pod of a known type has a tripod with telescopic legs that are joined at the top with a joint at the lower central area of the crossbar. The crossbar can be oriented in all directions. Furthermore, the buzz bar has a "V" shaped body hinged at one end of the crossbar so as to be inclined with respect to it and two segments hinged at the upper part of the "V" so as to be able to be folded on the "V" in the closed configuration or extended in the use configuration to allow 4 rods to rest on the ground. The equipment is dismountable as it must be transportable possibly with the weight and bulk being limited.

The buzz bars and rod pods of the known type have several drawbacks.

In the buzz bars of the known type, no more than 4 rods can be supported, as the length of the arm supported on the "V" is short and does not allow the rods to be sufficiently spaced apart.

Furthermore, the structures of the known type are not easily dismountable and are cumbersome even in the closed configuration.

### Summary of the invention

Therefore, the technical problem, set forth and solved by the present invention, is to provide a support system for fishing rods that allows to overcome the above-mentioned drawbacks pertaining to the prior art. One object of the present invention is to allow the support of a greater number of rods.

A further object of the invention is to facilitate assembly and disassembly operations.

These objects are achieved by a fishing rod support system according to claim 1.

According to another aspect of the present invention, a fishing rod support structure having the features defined in claim 10 is provided.

Preferred features of the present invention are described in the dependent claims.

The present invention provides some significant advantages.

In particular, the possibility of rotating the portions of the arm with respect to each other allows to increase the length of the support and therefore to position more rods.

Advantageously, the rotation with respect to an axis parallel to the elongated body makes the support system more robust and stable.

Other advantages, characteristics and the ways of use of the present invention will be evident from the following detailed description of some embodiments presented for illustrative and non-limiting purposes.

### Brief description of the figures

The present invention will now be described for illustrative but non-limiting purposes, according to its preferred embodiments, with particular reference to the figures of the attached drawings, in which:
Figure 1 shows a perspective view of a support system for fishing rods in a preferred embodiment of the present invention in an open configuration;
Figure 2 shows a perspective view of the support system of figure 1 in a partially closed configuration;
Figure 3 shows a perspective view of the support system of figure 1 in a closed configuration;
Figure 4 shows a detail of the support system of Figure 1;
Figure 5 shows a perspective view of a support structure in a first embodiment;
Figure 6 shows an embodiment of a support system associated with a peg;
Figure 7 shows an embodiment of a connecting element of the support system of Figure 6;
Figure 8 shows a detail of a peg;
Figure 9 shows a perspective view of a support structure in a second embodiment in an open configuration;
Figure 10 shows a detail of a connecting element to a base for ground support;
Figure 11 shows the support structure of Figure 9 in an inclined position;
Figure 12 shows a perspective view of the support structure of Figure 9 in a partially closed configuration;
Figure 13 shows the support structure of Figure 9 in a closing phase;
Figure 14 shows the support structure of Figure 12 in a closed configuration.

### Detailed description of preferred embodiments

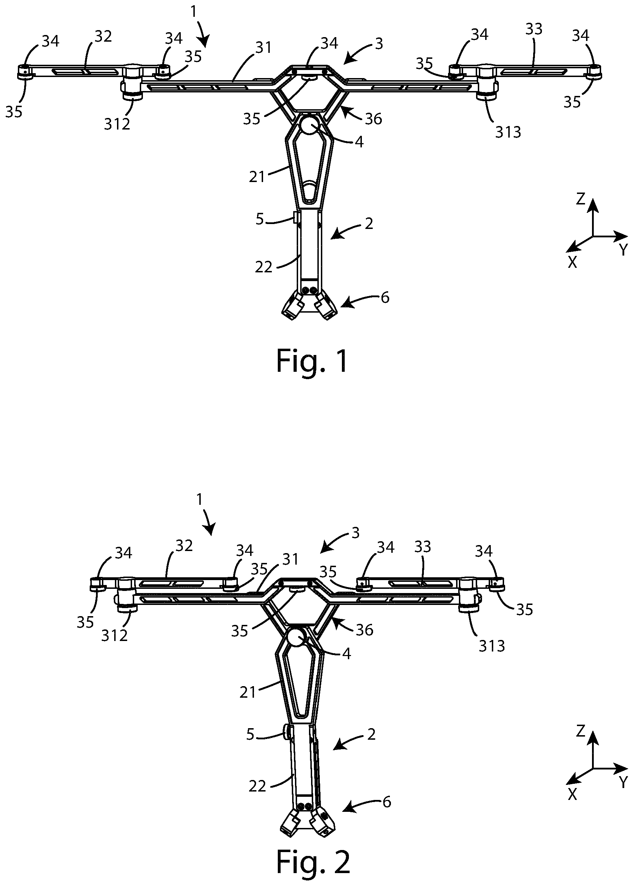

Figure 1 illustrates a fishing rod support system 1 in a preferred embodiment of the present invention.

The support system 1 comprises at least one support arm 3 (buzz bar) of at least one fishing rod, wherein the arm 3 is suitable for being connected to a ground support and comprises at least a first portion 31 and at least a second portion 32, wherein the second portion 32 is connected to the first portion 31 so as to rotate or translate between a closed position, in which it is at least partially superimposed on the first portion 31, and an open position in which it is at least partially adjacent to the first portion 31 so as to extend the extension of the first portion 31.

In the illustrated embodiment, the arm 3 comprises a third portion 33 hinged to the first portion 31. Advantageously, the second portion 32 and/or the third portion 33 is hinged to the first portion 31 at an end 312, 313 of the first portion 31.

The first portion 31 preferably has a greater length than the second portion 32 and/or the third portion 33.

In the open configuration (figure 1), the second portion 32 and/or the third portion 33 is at least partially adjacent to the first portion so as to extend the extension of the first portion 31.

In the closed configuration (figure 2), the second portion 32 and/or the third portion 33 is at least partially overlapping the first portion 31 so as to reduce the overall dimensions.

In particular, in the closed configuration the second portion 32 and/or the third portion 33 is substantially parallel to the first portion 31.

The support system 1 can be used both with the second portion 32 and the third portion 33 in the closed position, so as to support from one to four rods (figure 2), and with the second portion 32 and the third portion 33 in the open position, so as to support up to five rods (figure 1).

In the open position the rods can be correctly spaced so as not to interfere with each other.

It is also possible to position the second portion 32 in the closed configuration and the third portion 33 in the open configuration, or vice versa.

In an alternative embodiment, not illustrated, the second portion 32 and/or the third portion 33 is able to translate with respect to the first portion 31, for example by means of a telescopic guide.

The arm 3 has on one side (in use, the upper side) at least one seat 34 for the insertion of a signal. Advantageously, the arm 3 has a wheel 35 arranged on the opposite side with respect to the seat. The signal is placed in the seat 34, oriented in the correct fishing position and blocked in the position by means of the wheel 35. This avoids the use of adapters to orient the signals.

Advantageously, the arm 3 can be connected to a ground support or to a peg.

In particular, the arm has a shaped profile 36 associated with the first portion 31 of the arm 3. The profile 36 is a substantially U- or V-shaped profile.

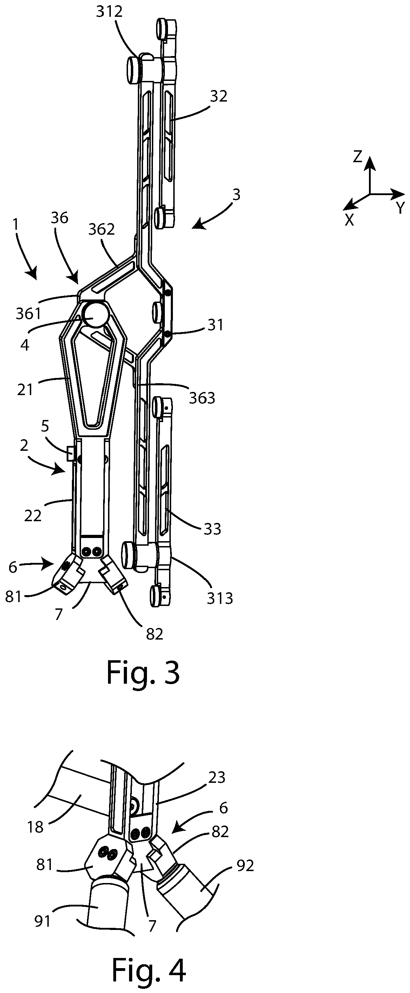

In the illustrated embodiment, the profile has a U-shape with a base segment 361 and sides 362 inclined outwards. The end of each side 362 has a segment 363 parallel to the base 361. Each segment 363 is fixed on the first portion 31 of the arm 3 (figure 3).

In the embodiment illustrated in figures 1-5, 9-14, the support system 1 comprises at least one body 2 suitable for being connected to a ground support.

The first portion 31 of the support arm 3 can be pivotally connected to the body 2.

Advantageously, the first portion 31 of the support arm 3 is hinged to the body 2 at an intermediate area of the first portion 31 of the support arm 3.

A hinge 4 is preferably arranged at a first end of the elongated body 2. In particular, the hinge 4 is arranged in a substantially central position of the first portion 31 of the arm 3.

In the illustrated embodiment, the base 361 of the profile 36 is connected to one end of the body 2 by means of the hinge 4. Advantageously, the hinge 4 allows for rotation of the arm 3 only in one direction.

In particular, two pins with a guide are arranged at the hinge 4 to allow the arm 3 to rotate only in one direction.

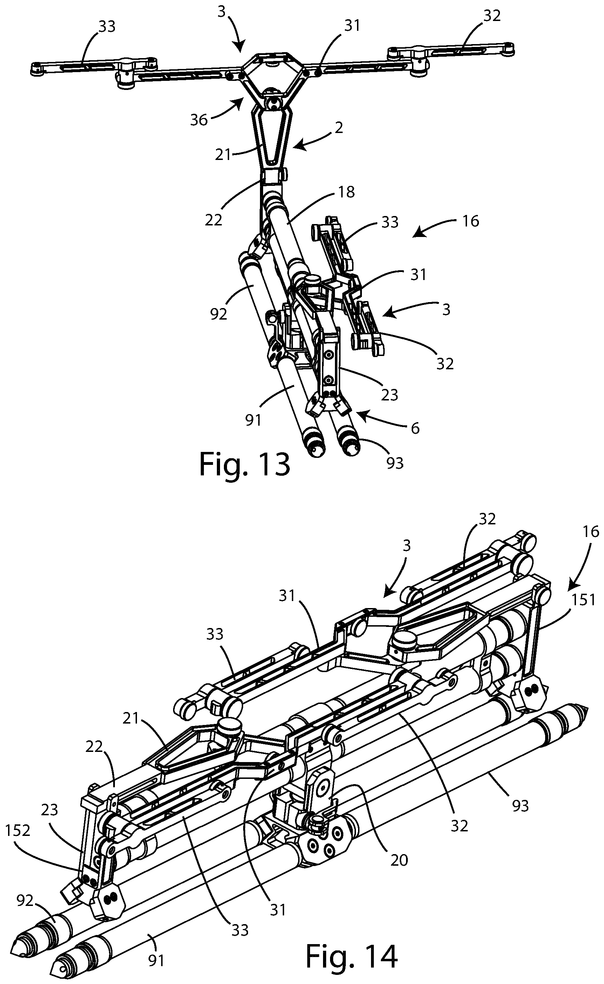

This allows a first buzz bar 3 to be rotated in one direction and a second buzz bar 3 in the opposite direction so that they are not overlapped in the closed configuration of the rod pod, making the structure compact and limiting the overall dimensions (figure 14).

In the illustrated embodiment, the body 2 to which the arm 3 is connected, is an elongated body with a longitudinal development. In use, in the open configuration, the first portion 31 of the arm 3 is arranged substantially perpendicular to the body 2.

In the open configuration of the support system 1, the first portion 31 is arranged with respect to the elongated body 2 so as to define a YZ plane (figures 1 and 2). In particular, the first portion 31 is suitable for rotating with respect to the body 2 in the YZ plane.

Preferably, the second portion 32 and/or the third portion 33 of the arm 3 is suitable for rotating in an XY plane perpendicular to the YZ plane.

Advantageously, the second portion 32 and/or the third portion 33 of the arm 3 rotates with respect to an axis substantially parallel to the elongated body 2. In an alternative embodiment, the second portion 32 and/or the third portion 33 of the arm 3 is able to rotate in the YZ plane.

Advantageously, the axis of rotation of the first portion 31 of the arm 3 with respect to the elongated body 2 is substantially perpendicular to the axis of rotation of the second portion 32 and/or of the third portion 33 with respect to the first portion 31.

The first portion 31 of the support arm 3 is hinged to the elongated body 2 so as to rotate in the YZ plane defined by the elongated body 2 and by the first portion 31 of the arm 3 in the use arrangement in which it is substantially perpendicular to the elongated body 2.

To close the support system 1, the first portion 31 is rotated so as to move into a position at least partially overlapping the elongated body 2 (figure 3). Preferably, in the closed configuration, the first portion 31 is substantially parallel to the elongated body 2.

Advantageously, the elongated body 2 is suitable for being connected to a ground support so as to rotate around an axis substantially perpendicular to the longitudinal development of the body 2 itself. In particular, the elongated body 2 is able to rotate in an XZ plane.

As illustrated in figures 1-3, 5, 9, 10, 12-14, the elongated body 2 has a first portion 21 and a second portion 22. The first portion 21 is connected to the arm 3, preferably to the first portion 31 of the arm 3, in particular to the shaped profile 36.

As illustrated in particular in figure 13, the second portion 22 of the body 2 is advantageously suitable for translating with respect to a guide 23 connectable to a ground support. The second portion 22 of the body 2 translates preferably inside the guide 23. A hinge 5 is arranged at the end of the guide 23 at the first portion 21 of the body 2 that allows the rotation of the second portion 22 of the elongated body 2 with respect to the guide 23.

The translation of the second portion 22 of the body 2 in the guide 23 allows the buzz bars 3 to be positioned in a compact manner on a support structure in the closed position.

In the open configuration, the second portion 22 of the body 2 is inserted into the guide 23 and fixed in the position of use of the buzz bar 3, for example by means of a pin.

The support on the ground may comprise a plurality of legs or a peg.

In the illustrated embodiment, the body 2 of the support system 1 advantageously comprises a fastening element 6 for a pair of legs.

The fastening element 6 is arranged at one end of the elongated body 2 opposite the arm 3. In particular, the fastening element 6 is arranged at one end of the guide 23 opposite the hinge 5.

As illustrated in figure 4, the fastening element 6 advantageously comprises at least one shaped portion 7.

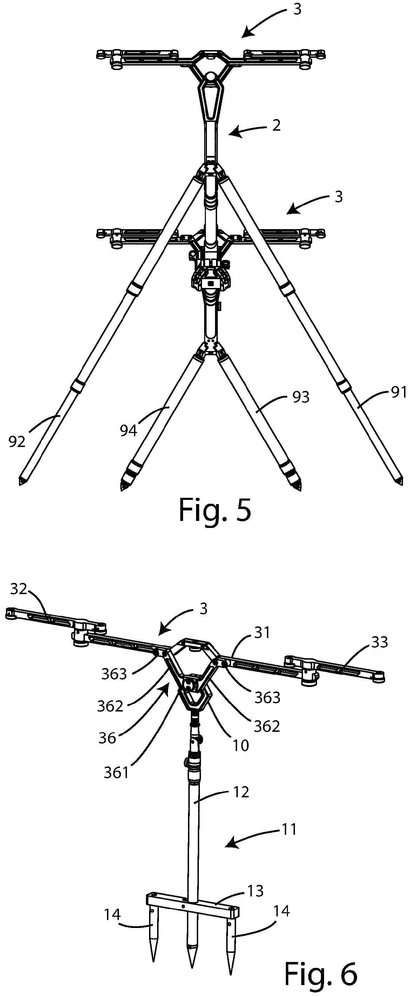

The shaped portion 7 is suitable for being connected to at least one counter-shaped plate 81 suitable for receiving at least one leg 91 of the ground support. The counter-shaped plate 81 is provided with at least one hole, preferably threaded, in which a leg 91 of the ground support can be inserted and fixed. Preferably, the shaped portion 7 is suitable for being connected to a pair of plates 81, 82, each suitable for fixing a respective leg 91, 92 (figure 5). Advantageously, the arm 3 can be disconnected from the body 2.

The arm 3 can be connected to a peg 11, as illustrated in figure 6.

In particular, the profile 36 of the buzz bar 3 is associated with a peg 11 by means of a connecting element 10.

The connecting element 10 is preferably shaped to be connected to the profile 36, in particular to the base segment 361.

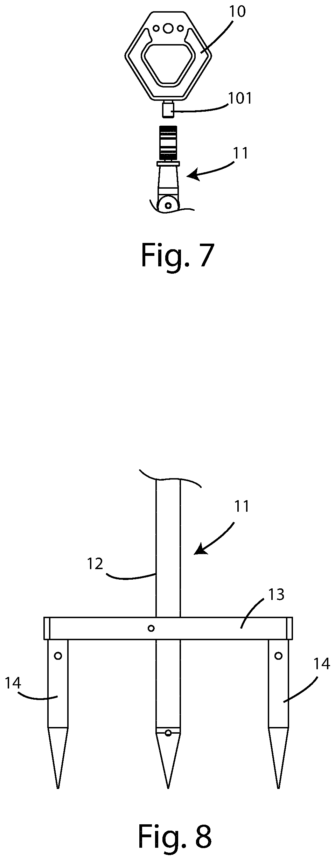

The connecting element 10 has a pin 101, which can be inserted into one end of a peg 11 (figure 7).

In an alternative form, the profile 36 comprises a pin for inserting one end of a peg.

In the preferred embodiment illustrated in particular in figure 8, the peg 11 comprises a telescopic cylindrical rod 12 having one end insertable into a base 13. The base 13 comprises a pin 14 at each end. In this way the peg 11 can be inserted into the ground in a stable manner.

In the embodiment illustrated in figures 1-5, 9-14, the elongated body 2, in particular the second portion 22 of the elongated body 2, is adapted to be connected to a crossbar 15 of a structure 16 for supporting fishing rods.

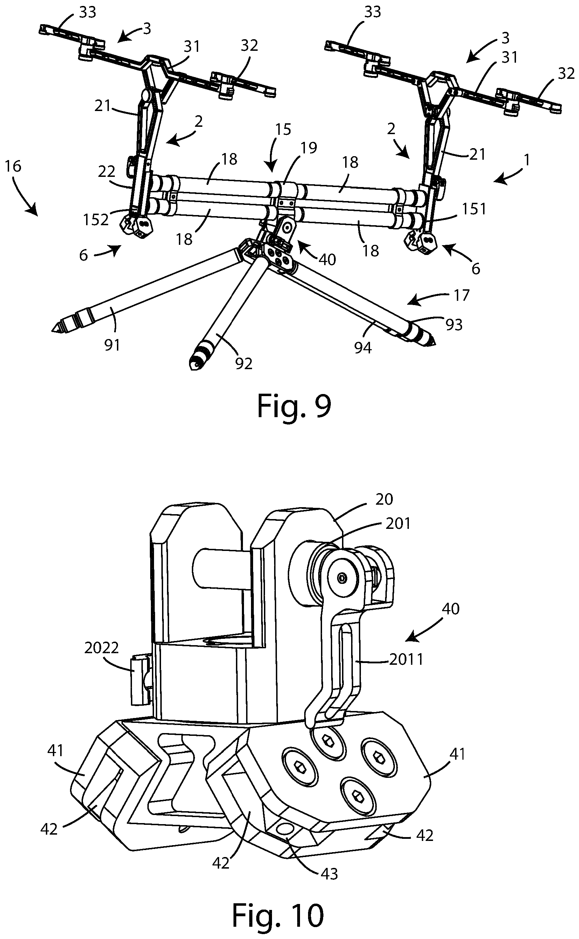

The support structure 16, illustrated in figures 9, 11-14, comprises a base 17 of ground support, a crossbar 15 connectable to the base 17 of ground support, and at least one support system 1 for fishing rods associated with the crossbar 15.

In particular, the support structure 16 comprises two support systems 1. Each support system 1 is connected to an end 151, 152 of the crossbar 15.

In the illustrated embodiment, an end 151, 152 of the crossbar 15 is associated with the second portion 22 of the elongated body 2 of a corresponding support system 1.

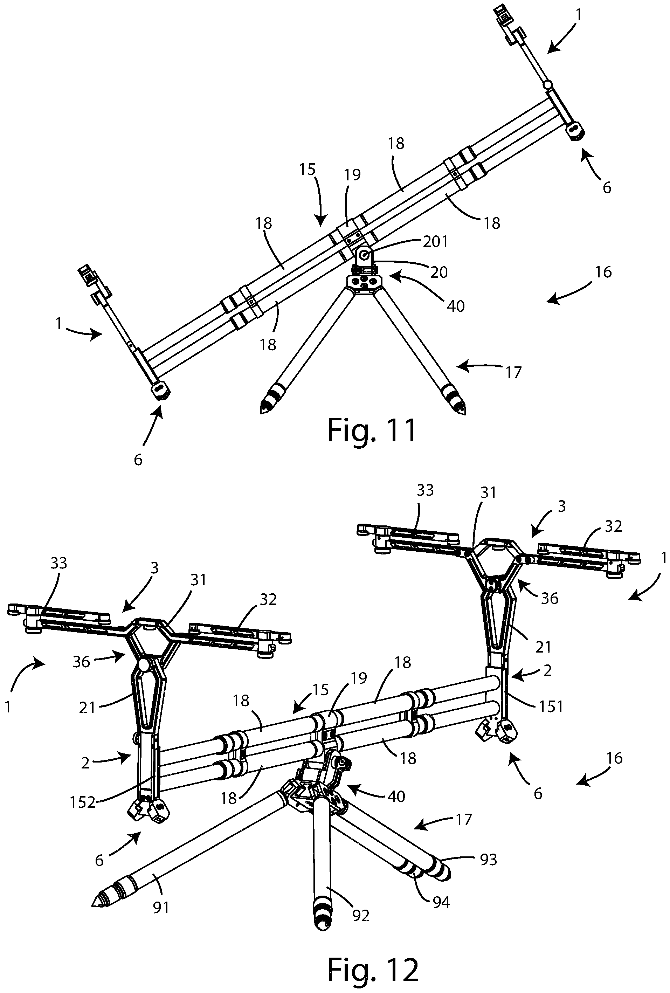

In particular, the crossbar 15 is associated with the guide 23 at a lower height than the hinge 5. In this way, it is possible to translate the elongated body 2 with respect to the guide 23, bringing the second portion 22 outside the guide 23 and therefore rotating the elongated body 22 with respect to the hinge 5 to bring the support system 1 into a configuration parallel to the crossbar 15 (figure 12).

The crossbar 15 advantageously comprises at least one tubular element 18, in particular a telescopic cylindrical element. Preferably the crossbar 15 has a pair of tubular elements 18, in particular telescopic cylindrical, parallel to each other and arranged, in use, on a substantially vertical plane YZ.

In the illustrated embodiment, the crossbar 15 comprises a central body 19 which has on each side a pair of telescopic cylindrical elements 18. One end of each cylindrical element 18 is suitable for being fixed to a corresponding elongated body 2 of the support system 1.

Advantageously the telescopic elements 18 are blocked by means of ring nuts, so as not to interfere with the lines of the fishing rods.

In the illustrated embodiment, the support structure comprises a connecting element 40 of the crossbar 15 to a base 17 of ground support. Advantageously, the connecting element 40 allows adjustment of the inclination of telescopic elements 18 and/or rotation of telescopic elements 18 with respect to a substantially vertical axis.

In particular, as illustrated in figure 10, the connecting element comprises at least one seat 20, preferably shaped like a "U", for the insertion and fixing of a portion of the crossbar 15, in particular of the central body 19 of the crossbar 15.

The seat advantageously comprises a first hinge 201 for adjusting the inclination of the crossbar 15, which is fixed in the desired position by means of a first clamping lever 2011 (figure 11). This allows the "pitch", i.e. the inclination of the rods upwards or downwards with respect to the fishing direction, to be fixed up to approximately 180°.

Preferably, the seat 20 comprises a second hinge for adjusting the rotation of the crossbar 15 with respect to a substantially vertical axis. The rotation can reach 360°. The seat 20 comprises a second clamping lever 2022 to fix the rotation so as to orient the rods towards a new fishing point without moving the entire support structure 16.

Advantageously, the connecting element 40 comprises at least one plate 41 having a cavity 42 for the insertion of at least one leg of the base of the ground support.

In particular, the connecting element 40 comprises two side plates 41 (figure 10). Each plate 41 is provided with at least one cavity 42 in which a perforated piece 43 is arranged. In the hole, preferably threaded, a leg of a base of the ground support is screwed or unscrewed.

Advantageously, the perforated piece 43 is movable inside the cavity 42 and is suitable for being fixed so as to individually adjust the inclination of each leg.

The perforated piece can be brought into a closed configuration in which the legs are arranged parallel to the crossbar (figures 13, 14).

The crossbar 15 can also be connected to two legs arranged at each end by means of the fastening element 6 of the support system 1 (figure 5).

The support structure 16 is therefore versatile and adaptable to different types of terrain.

In the embodiment illustrated in figures 9, 11-14, the crossbar 15 is mounted on a base 17 of ground support comprising four legs 91, 92, 93, 94, in particular telescopic legs.

Figure 14 shows the support structure 16 in the closed configuration suitable for transport.

The telescopic cylinders 18 of the crossbar 15 are closed.

The closed configuration is obtained by rotating the second portion 32 and the third portion 33 of the arm 3 so as to overlap them with the first portion 31 (figure 2). Then the first portion 31 of each arm (buzz bar) 3 is rotated with respect to the elongated body 2 bringing the arm 3 to a position substantially parallel and overlapping the elongated body 2 (figure 3). The pin arranged at the hinge 5 is loosened and the second portion 22 of the elongated body 2 is translated with respect to the guide 23. The elongated body 2 is then rotated with respect to the guide 23 so as to move to a position substantially parallel to the crossbar 15.

The telescopic legs 91, 92, 93, 94 are closed and rotated so as to be brought to a position substantially parallel to the crossbar 15.

The support structure is then closed easily. Furthermore, in the closed configuration the support structure has a limited overall size and can be easily transported.

The present invention has been described for illustrative, but not limiting purposes, according to its preferred embodiments, but it is to be understood that variations and/or modifications may be made by those skilled in the art without departing from the relevant scope of protection as defined by the attached claims.

## Claims

1. Support system for fishing rods, comprising at least one support arm (3) for supporting at least one fishing rod, wherein the arm (3) is configured to be connected to a ground support, the support system being **characterized in that** the arm (3) comprises at least a first portion (31) and at least a second portion (32), wherein the second portion (32) is connected to the first portion (31) so as to rotate or translate between a closed position where it is at least partially overlapping the first portion (31) and an open position where it is at least partially adjacent to the first portion (31) so as to extend the extension of the first portion (31).

2. Support system according to the preceding claim, **characterized in that** the second portion (32) is hinged to the first portion (31) at one end (312) of the first portion (31).

3. Support system according to claim 1 or 2, **characterized in that** it comprises at least one body (2) configured to be connected to a ground support, wherein the first portion (31) of the support arm (3) is pivotally connected to the body (2).

4. Support system according to the preceding claim, **characterized in that** the first portion (31) of the support arm (3) is hinged to the body (2) at an intermediate area of the first portion (31) of the support arm (3).

5. Support system according to any one of the preceding claims 3-4, **characterized in that** the body (2) is elongated and the first portion (31) of the arm (3) is configured to be arranged, in use, substantially perpendicular to the body (2), wherein the second portion (32) of the arm (3) rotates about an axis substantially parallel to the elongated body (2).

6. Support system according to the preceding claim, **characterized in that** the first portion (31) of the support arm (3) is hinged to the elongated body (2) so as to rotate in the plane defined by the elongated body (2) and the first portion (31) of the arm (3) in the in-use arrangement where it is substantially perpendicular to the elongated body (2).

7. Support system according to any one of the preceding claims 3-6, **characterized in that** it comprises at least one guide (23) configured to be connected to a ground support, wherein said body (2) is hinged to one end of the guide (23).

8. Support system according to the preceding claim, **characterized in that** the body (2) comprises at least one portion (22) configured to slide in the guide (23).

9. Support system according to any one of the preceding claims 3-7, **characterized in that** the body (2) has a fastening element (6) to at least one leg of the ground support.

10. Support structure for fishing rods comprising a ground support base (17), a crossbar (15), a support system (1) according to any one of the preceding claims connectable to the crossbar (15), a connection element (40) of the crossbar (15) to the ground support base (17), wherein the connection element (40) comprises at least one plate (41) having a cavity (42) for the insertion of at least one leg of the ground support base (17).
